# EUROPÄISCHE PATENTSCHRIFT

(11) **EP 3 079 238 B1**
(45) Veröffentlichungstag und Bekanntmachung des Hinweises auf die Patenterteilung: **12.08.2020**
(21) Anmeldenummer: 15162666.0
(22) Anmeldetag: 07.04.2015
(51) Int. Cl.: H02K 7/08, H02K 7/116, H02K 15/16, H02K 9/19, H02K 5/15, B60K 17/16

(54) **ELEKTRISCHE MASCHINENANORDNUNG UND KRAFTFAHRZEUGGETRIEBE**
ELECTRICAL MACHINE ASSEMBLY AND MOTOR VEHICLE TRANSMISSION GEARBOX
SYSTÈME DE MACHINE ÉLECTRIQUE ET BOÎTE DE VITESSES DE VÉHICULE AUTOMOBILE

(43) Veröffentlichungstag der Anmeldung: 12.10.2016
(60) Teilanmeldung: 17157714.1
(73) Patentinhaber: Magna PT B.V. & Co. KG, 74199 Untergruppenbach (DE)
(72) Erfinder: Ihben, Harald, 71640 Ludwigsburg (DE); Berg, Holger, 74078 Heilbronn (DE); Schweiher, Mark, 74348 Lauffen (DE); Hoffmeister, Thomas, 70825 Korntal-Münchingen (DE)
(74) Vertreter: Rausch, Gabriele

(56) Entgegenhaltungen:
- EP-A1- 2 806 541
- DE-A1-102013 217 040
- US-A- 5 832 789

## Beschreibung

Die vorliegende Erfindung betrifft eine elektrische Maschinenanordnung für einen Kraftfahrzeugantriebsstrang, mit einem Maschinengehäuse, das an einem Antriebsstranggehäuse festlegbar ist, mit einem Stator, der in Bezug auf das Maschinengehäuse festgelegt ist, mit einem Rotor, der konzentrisch zu dem Stator innerhalb des Maschinengehäuses gelagert ist und eine Rotorachse aufweist, wobei zwischen dem Stator und dem Rotor ein Luftspalt definiert ist.

Ferner betrifft die vorliegende Erfindung ein Kraftfahrzeuggetriebe mit einem Getriebegehäuse, innerhalb dessen eine elektrische Maschinenanordnung festgelegt ist.

Schließlich wird - nicht zur Erfindung gehörend - ein Verfahren zum Herstellen einer solchen elektrischen Maschinenanordnung beschrieben.

Elektrische Maschinen eignen sich als Antriebsmaschinen für Kraftfahrzeuge, beispielsweise bei reinen Elektrofahrzeugen oder auch bei Kraftfahrzeugen mit Hybrid-Antriebsstrang. Bei Kraftfahrzeugen mit Hybrid-Antriebsstrang ist ein Verbrennungsmotor als Antriebsmotor vorgesehen, der in an sich üblicher Weise über ein Getriebe mit wenigstens einer angetriebenen Achse verbunden ist. Das Layout innerhalb des Kraftfahrzeuges ist dabei weitgehend vorgegeben. Für die Integration der elektrischen Maschinen in einen solchen Antriebsstrang gibt es eine Vielzahl von Möglichkeiten. Bei Antriebssträngen, bei denen die elektrische Maschine beispielsweise mit einem Eingang des Getriebes verbunden ist, kann die elektrische Maschine koaxial zu der Kurbelwelle des Verbrennungsmotors angeordnet sein. Ferner ist es bekannt, eine elektrische Maschine koaxial zu einer Abtriebswelle eines Getriebes anzuordnen. Auch ist es bekannt, eine elektrische Maschine außerhalb eines Getriebegehäuses anzuordnen und über geeignete Verbindungsmittel mit dem Getriebe zu verbinden, beispielsweise über ein Zugmittel oder einen Stirnradsatz.

Sofern die elektrische Maschine außerhalb des Getriebegehäuses angeordnet ist, weist die elektrische Maschine ein eigenes Maschinengehäuse auf, innerhalb dessen ein Rotor drehbar gelagert ist, in der Regel über zwei Drehlager wie Wälzlager.

Lagerkräfte werden bei dieser Anordnung über das Maschinengehäuse auf eine Aufhängung des Maschinengehäuses übertragen. Das Maschinengehäuse muss bei dieser Ausführungsform vergleichsweise stabil ausgelegt werden.

Alternativ ist es auch bekannt, in einem Hybrid-Antriebsstrang die elektrische Maschine innerhalb des Getriebegehäuses aufzunehmen. Bei dieser Ausführungsform weist die elektrische Maschine kein "eigenes" Maschinengehäuse auf, vielmehr ist ein Abschnitt des Getriebegehäuses so ausgebildet, dass er ein Maschinengehäuse nachbildet. In diesem Fall wird ein Rotor beispielsweise drehbar in Bezug auf das Getriebegehäuse gelagert. Lagerkräfte können insofern direkt in das Getriebegehäuse eingeleitet werden, das ohnehin relativ stabil ausgeführt werden muss.

Ein gewisser Nachteil bei dieser Ausführungsform besteht darin, dass erst durch den Einbau des Stators und des Rotors in das Getriebe die ordnungsgemäße Funktion der elektrischen Maschinenanordnung überprüft werden kann. Eine späte Überprüfung der Funktionsfähigkeit der elektrischen Maschine bei der Herstellung des Hybrid-Antriebsstranges ist nachteilig, da bei Auftreten von Fehlern gegebenenfalls das gesamte Getriebe demontiert werden muss.

Bei der Anbindung einer elektrischen Maschinenanordnung mit eigenem Maschinengehäuse, das außerhalb des Getriebegehäuses angeordnet ist, stellt sich häufig das Problem der geeigneten Abdichtung bei der Anbindung einer Motorantriebswelle an ein Getriebeelement. Sofern eine komplett vormontierte elektrische Maschine mit eigenen Rotorlagern in das Getriebegehäuse einzubauen ist, ergeben sich Nachteile hinsichtlich Gewicht und Kosten. Denn in diesem Fall ist eine Vielzahl von Lagern vorzusehen. Das Maschinengehäuse muss stabil und folglich mit hohem Gewicht ausgebildet werden, obgleich die Lagerkräfte unmittelbar an das Getriebegehäuse übergeben werden, das ohnehin mechanisch stabil ausgeführt ist.

Ein Beispiel einer elektrischen Maschine, die ohne eigenes Maschinengehäuse in ein Getriebegehäuse eingebaut ist, ist aus dem Dokument DE 10 2012 019 971 A1 bekannt.

Weiterhin ist es aus dem Dokument DE 10 2012 024 462 A1 bekannt, eine elektrische Maschine in einem Getriebegehäuse anzuordnen, wobei Maßnahmen getroffen sind, die für eine bessere Lageranordnung für eine Radsatzanordnung sowie für ein verbessertes Montageverfahren dienen.

Aus dem Dokument DE 10 2012 022 452 A1 ist es bekannt, ein Blechpaket eines Stators außenumfänglich mit Nuten zu versehen, die gemeinsam mit einem Innenumfang eines Maschinengehäuses als Kühlkanäle dienen. An einem axialen Ende des Blechpaketes kann dabei ein Kühlkanalverbindungsmittel vorgesehen sein, um wenigstens zwei Kühlkanäle im Bereich ihrer Enden unter Bildung einer Mäanderanordnung miteinander zu verbinden. Das Dokument DE 10 2012 022 453 A1 offenbart ferner, eine Rotorwelle als Hohlwelle auszubilden, durch die hindurch Kühlfluid geleitet werden kann.

Weiterhin offenbart das Dokument DE 197 21 528 A1 eine elektrische Maschine sowie ein Verfahren zu deren Montage an einem Aggregat, wobei die elektrische Maschine einen Stator und einen Rotor aufweist. Die elektrische Maschine weist dabei keine den Rotor gegenüber dem Stator drehbar festlegenden und dabei die Rotationsachse des Rotors definierenden Lagermittel auf. Stattdessen weist die elektrische Maschine Mittel zum temporären Festlegen der Position des Rotors gegenüber dem Stator auf. Hierdurch kann der Rotor axial, radial und in Umfangsrichtung gegenüber dem Stator festgelegt werden. Nach Montage des Rotors an einer Getriebewelle und nach Festlegen des Stators an einem Gehäuse müssen die Festlegungsmittel gelöst werden, wobei der Rotor zu diesem Zweck axial gegenüber dem Stator versetzt wird.

Schliesslich offenbart US 5,832,789 A die Merkmale aus dem Oberbegriff des Anspruchs 1.

Vor diesem Hintergrund ist es eine Aufgabe der Erfindung, eine verbesserte elektrische Maschinenanordnung, ein verbessertes Kraftfahrzeuggetriebe sowie - nicht zur Erfindung gehörend - ein zum Herstellen einer elektrischen Maschinenanordnung anzugeben, wobei erfindungsgemäss die elektrische Maschinenanordnung mit geringem Gewicht ausgeführt wird und wobei vorzugsweise eine elektrische Maschine vor der Montage in einem Getriebegehäuse hinsichtlich der elektrischen Funktionen prüfbar ist und/oder wobei die elektrische Maschinenanordnung vorzugsweise kostengünstig ausgeführt werden kann.

Nicht zur Erfindung gehörend weist der Rotor einen Rotorlagerabschnitt auf, der mit radialem Spiel drehbar in Bezug auf einen Gehäuselagerabschnitt des Maschinengehäuses gelagert ist, wobei das radiale Spiel kleiner ist als der Luftspalt zwischen Rotor und Stator.

Ferner wird die obige Aufgabe gelöst durch ein Kraftfahrzeuggetriebe mit einem Getriebegehäuse, innerhalb dessen eine erfindungsgemäße elektrische Maschinenanordnung festgelegt ist.

Schließlich wird nicht zur Erfindung gehörend - die ein Verfahren zum Herstellen einer elektrischen Maschinenanordnung vorgestellt mit den Schritten, ein Maschinengehäuse bereitzustellen, das einen Gehäuselagerabschnitt aufweist, einen Stator bereitzustellen und diesen an dem Maschinengehäuse festzulegen, einen Rotor bereitzustellen, der zwei axiale Rotorendabschnitte aufweist, und den Rotor axial in den Stator einzuführen, wobei zwischen dem Stator und dem Rotor ein Luftspalt eingerichtet wird und wobei einer der Rotorendabschnitte in den Gehäuselagerabschnitt eingeführt wird, derart, dass er mit radialem Spiel drehbar in Bezug auf den Gehäuselagerabschnitt des Maschinengehäuses gelagert ist, wobei das radiale Spiel kleiner ist als der Luftspalt zwischen Rotor und Stator.

Mit der oben vorgestellten elektrischen Maschinenanordnung ist es möglich, diese vor Montage an einem Kraftfahrzeug-Antriebsstrang auf ihre Funktionsfähigkeit hin zu testen, insbesondere in elektrischer Hinsicht. Durch die Maßnahme, einen Rotorlagerabschnitt direkt in einem Gehäuselagerabschnitt des Maschinengehäuses in radialer Richtung verdrehbar zu lagern, ist es dabei auf einfache Weise möglich, den Rotor beispielsweise in einer Testumgebung an eine Last anzuschließen. Die Testumgebung ist vorzugsweise so ausgebildet, dass für den Rotor geeignete Maschinenlager bereitgestellt sind. Sofern die elektrische Maschinenanordnung noch nicht in Betrieb ist, wird vermieden, dass der Rotor den Stator kontaktiert. Dies könnte insbesondere möglich sein, wenn der Rotor magnetisiert ist, insbesondere, wenn an dem Rotor Permanentmagnete festgelegt sind. Durch die Anziehungskräfte könnten Rotor und/oder Stator beschädigt werden, wenn diese einander berühren. Das Lösen ist zudem in diesem Fall sehr aufwändig und erfordert hohe Kräfte. Durch die Maßnahme, das radiale Spiel kleiner zu wählen als die Abmessung des Luftspaltes, kann ein solcher Kontakt zwischen Rotor und Stator sicher ausgeschlossen werden. Dies gilt insbesondere für eine Phase, nachdem eine elektrische Maschinenanordnung auf ihre Funktionsfähigkeit hin getestet worden ist und bis zu dem Zeitpunkt, bei dem sie an einem Antriebsstrang festgelegt wird.

Die Radiallagerung des Rotorlagerabschnittes an dem Gehäuselagerabschnitt stellt also eine Art "Transportsicherung" dar, die den Rotor innerhalb enger Grenzen in Bezug auf das Maschinengehäuse und in Bezug auf den Stator führt.

Der Rotor kann dabei einen Rotorlagerabschnitt aufweisen, der beispielsweise im Bereich von einem axialen Rotorendabschnitt ausgebildet ist. In diesem Fall kann an dem anderen axialen Endabschnitt eine Lagerung des Rotors an dem Maschinengehäuse über ein Drehlager erfolgen, wie beispielsweise ein Wälzlager.

Alternativ ist es möglich, dass der Rotor im Bereich von zwei gegenüberliegenden axialen Rotorendabschnitten jeweils einen Rotorlagerabschnitt aufweist, wobei in diesem Fall das Maschinengehäuse in entsprechender Weise zwei zugeordnete Gehäuselagerabschnitte aufweisen könnte.

Das Maschinengehäuse ist vorzugsweise so aufgebaut, dass es innerhalb des Antriebsstranggehäuses festlegbar ist, insbesondere im Innenraum eines Getriebegehäuses. Der Stator ist vorzugsweise innerhalb des Maschinengehäuses festgelegt. Der Rotor ist drehbar innerhalb des Maschinengehäuses gelagert, ist jedoch vorzugsweise hinsichtlich seiner axialen Lage in Bezug auf das Maschinengehäuse fixiert, so dass bei der elektrischen Maschinenanordnung Relativbewegungen zwischen dem Stator und dem Rotor in axialer Richtung ausgeschlossen werden können.

Vorzugsweise erfolgt demgemäß bei einer Montage der Maschinenanordnung an einem Antriebsstrang auch kein axialer Relativversatz zwischen Stator und Rotor.

Der Luftspalt zwischen Stator und Rotor ist ein Nennmaß, das insbesondere für den Betrieb der elektrischen Maschinenanordnung festgelegt ist (innerhalb sehr enger Toleranzen). Das radiale Spiel zwischen Rotorlagerabschnitt und Gehäuselagerabschnitt ist kleiner als der Luftspalt. In dem vormontierten Zustand vor Einbau an einem Antriebsstrang kann der Luftspalt folglich noch um das radiale Spiel variabel sein.

Vorzugsweise ist der Rotor über die Lagerung am Maschinengehäuse nicht drehfixiert, ist also in Umfangsrichtung frei in Bezug auf den Gehäuselagerabschnitt verdrehbar.

Der Gehäuselagerabschnitt und der Rotorlagerabschnitt bilden eine Art Zentrierungseinrichtung. Die Abmessung des Luftspaltes ist in radialer Richtung wenigstens zweimal so groß wie das radiale Spiel, insbesondere fünfmal so groß, und vorzugsweise wenigstens zehnmal so groß, ist jedoch vorzugsweise kleiner als das 100-fache des Radialspiels.

Insgesamt kann bei dem Kraftfahrzeuggetriebe ferner vorgesehen sein, dass der Rotor im Bereich von wenigstens einem axialen Rotorendabschnitt drehbar in Bezug auf das Getriebegehäuse gelagert wird, insbesondere über ein Drehlager wie ein Wälzlager. Dies kann insbesondere jener Abschnitt sein, an dessen axialem Ende auch der Rotorlagerabschnitt ausgebildet ist.

Insgesamt kann das Gesamtsystem aus elektrischer Maschinenanordnung und Kraftfahrzeuggetriebe auf niedriges Gesamtgewicht optimiert sein. Ferner kann das erfindungsgemäße Kraftfahrzeuggetriebe leichter montiert werden. Denn bei der Montage der elektrischen Maschinenanordnung müssen keine besonderen Maßnahmen dafür getroffen werden, dass der Rotor in Bezug auf den Stator zentriert wird. Eine derartige Zentrierung kann bereits über die Lagerung des Rotorlagerabschnittes an dem Gehäuselagerabschnitt des Maschinengehäuses realisiert werden. Die Montage kann daher mit relativ einfachen Mitteln erfolgen. Rotor und Stator können folglich auch gemeinsam innerhalb des Maschinengehäuses zur Getriebemontage transportiert werden.

Im Gegensatz zu elektrischen Maschinenanordnungen, die über zwei eigene Rotorwellenlager verfügen, ist es in der Regel dennoch notwendig, auch eine Lagerung eines Abschnittes der Maschinenantriebswelle bzw. des Rotors in Bezug auf das Getriebegehäuse vorzusehen, insbesondere zum Abstützen von Axialkräften bzw. Querkräften aus einer (Schräg-)Verzahnung eines Ritzels, das mit der Maschinenantriebswelle verbunden ist. Demzufolge sind in diesem Fall häufig drei Wälzlager vorzusehen, was zu hohen Kosten, hohem Gewicht und letztendlich erhöhten Schleppverlusten (geringerer Wirkungsgrad) führt.

Bei der elektrischen Maschinenanordnung und dem Kraftfahrzeuggetriebe ist eine Lagerung des Rotors über nur zwei Drehlager, beispielsweise in Form von Wälzlagern, möglich, so dass diese Nachteile gegebenenfalls vermieden werden können.

Gemäß einer weiteren nicht zur Erfindung gehörenden Ausführungsform, die in Verbindung mit den in Absatz 1 dieser Beschreibung genannten Merkmalen steht, weist der Rotor einen ersten axialen Rotorendabschnitt auf, der über ein erstes Drehlager wie ein Wälzlager drehbar in Bezug auf das Maschinengehäuse gelagert ist, wobei der Rotor einen zweiten axialen Rotorendabschnitt aufweist, der sich in einer axialen Richtung zumindest teilweise aus dem Maschinengehäuse heraus erstreckt und dazu ausgebildet ist, mittels eines zweiten Drehlagers wie eines Wälzlagers drehbar in Bezug auf das Antriebsstranggehäuse gelagert zu werden.

Die vormontierte elektrische Maschinenanordnung sieht folglich vor, dass der Rotor vorzugsweise ausschließlich über ein erstes und ein zweites Drehlager gelagert wird, von denen eines sich an dem Maschinengehäuse abstützt und von denen sich das zweite an dem Antriebstranggehäuse abstützt.

Insgesamt kann so eine elektrische Maschinenanordnung mit einer minimalen Anzahl an Lagern und der Möglichkeit bereitgestellt werden, im Bereich eines sich aus dem Maschinengehäuse heraus erstreckenden Abschnittes des Rotors ein Ritzel anzubringen, das schrägverzahnt ist. Denn die hierbei auftretenden Axialkräfte können dabei über das zweite Drehlager vorzugsweise aufgenommen werden.

Demzufolge ist es bevorzugt, wenn an dem zweiten axialen Rotorendabschnitt ein Zahnrad gelagert ist.

Das Zahnrad ist dabei insbesondere an dem zweiten axialen Rotorendabschnitt festgelegt, der hierbei eine Maschinenantriebswelle bildet. Das Zahnrad ist insbesondere ein Antriebsritzel der elektrischen Maschinenanordnung. Von besonderem Vorzug ist es, wenn das Zahnrad in axialer Richtung zwischen dem Maschinengehäuse und einem Abschnitt angeordnet ist, an dem das zweite Drehlager festgelegt wird.

Folglich ist es vorteilhaft, wenn das Zahnrad in der axialen Richtung zwischen dem Maschinengehäuse und einem Drehlagerbereich des zweiten Rotorendabschnittes angeordnet ist.

Gemäß einer weiteren Ausführungsform, die in Verbindung mit den in Absatz 1 genannten Merkmalen die Erfindung darstellt, weist der Rotor einen ersten axialen Rotorendabschnitt auf, der über ein erstes Drehlager drehbar in Bezug auf das Maschinengehäuse gelagert ist, wobei das erste Drehlager an einem ersten Lagersitz eines ersten Wandabschnittes des Maschinengehäuses festgelegt ist und wobei der erste Wandabschnitt des Maschinengehäuses ferner so ausgebildet ist, dass von dem Rotor über das erste Drehlager in den ersten Wandabschnitt eingeleitete Radialkräfte in das Antriebsstranggehäuse übertragen werden können, wenn das Maschinengehäuse an dem Antriebsstranggehäuse festgelegt ist.

Bei dem erfindungsgemäßen Kraftfahrzeuggetriebe werden folglich Lagerkräfte, die über das erste Drehlager in den ersten Wandabschnitt eingeleitet werden, unmittelbar in das Getriebegehäuse eingeleitet.

Der erste Wandabschnitt des Maschinengehäuses kann daher so ausgebildet werden, dass er keine hohen radialen Kräfte übertragen muss. Folglich kann erfindungsgemäss das Maschinengehäuse insgesamt mit geringem Gewicht realisiert werden.

Von besonderem Vorzug ist es, wenn das Maschinengehäuse hierbei einen zweiten Wandabschnitt aufweist, an dem der Gehäuselagerabschnitt ausgebildet ist, wobei der zweite Wandabschnitt beispielsweise als stabile Lagerplatte ausgebildet sein kann. Ein Zylinderabschnitt des Maschinengehäuses zwischen den Wandabschnitten und der erste Wandabschnitt können vorzugsweise einstückig ausgebildet sein. Da der Zylinderabschnitt und der erste Wandabschnitt keine hohen Kräfte übertragen müssen, kann dieser Teil des Maschinengehäuses beispielsweise aus einem dünnen Material wie einem Blech hergestellt sein.

Erfindungsgemäss ist vorgesehen, dass der erste Wandabschnitt einen Ringsteg aufweist, der in eine Ringstegaufnahme des Antriebsstranggehäuses einsetzbar ist.

Der Ringsteg und die Ringstegaufnahme sind dabei vorzugsweise koaxial zu dem ersten Lagersitz ausgebildet.

Der Ringsteg ist erfindungdgemäss in axialer Richtung überlappend zu dem ersten Lagersitz des ersten Wandabschnittes des Maschinengehäuses angeordnet.

Folglich können auf diese Weise Radialkräfte über den Ringsteg im Wesentlichen direkt in radialer Richtung in das Antriebsstranggehäuse geleitet werden.

Gemäß einer weiteren bevorzugten Ausführungsform weist das Maschinengehäuse einen zweiten Lagersitz für eine Nebenwelle auf, die parallel versetzt zu einer Längsachse des Rotors ist.

Die Verbindung zwischen der elektrischen Maschinenanordnung und dem Getriebe erfolgt vorzugsweise über eine Stirnradanordnung. Die Stirnradanordnung beinhaltet dabei vorzugsweise ein Antriebsritzel, das koaxial zu dem Rotor an einem Abschnitt des Rotors in Form der Maschinenantriebswelle festgelegt ist, sowie ein Zahnrad des Getriebes, beispielsweise ein Losrad, das einer Gangstufe des Getriebes zugeordnet ist. Von besonderem Vorzug ist es, wenn zwischen dem Zahnrad des Getriebes und dem Maschinenantriebsritzel ein weiteres Zahnrad vorgesehen ist, das vorzugsweise an einer Nebenwelle festgelegt ist. Die Nebenwelle ist in diesem Fall vorzugsweise zum einen drehbar über das Maschinengehäuse gelagert und zum anderen vorzugsweise über das Getriebegehäuse.

Mit anderen Worten wird das Maschinengehäuse von vorneherein so vorgesehen, dass eine Nebenwelle, an der ein solches Zwischenrad festgelegt ist, sich an einem axialen Ende an dem Maschinengehäuse lagern lässt.

Demzufolge ist es von Vorteil, wenn der zweite Lagersitz an einem zweiten Wandabschnitt des Maschinengehäuses ausgebildet ist, wobei an dem zweiten Wandabschnitt auch der Gehäuselagerabschnitt ausgebildet ist.

Der zweite Wandabschnitt ist vorzugsweise als Lagerplatte ausgebildet, mittels der sich die elektrische Maschine in dem Getriebegehäuse festlegen lässt. Der zweite Wandabschnitt kann dabei einen umfänglichen Flanschabschnitt aufweisen, mittels dessen eine derartige Festlegung beispielsweise über Schrauben realisierbar ist.

Der zweite Lagersitz an dem zweiten Wandabschnitt des Maschinengehäuses ist dabei vorzugsweise von außerhalb des Maschinengehäuses zugänglich. Das Drehlager, das vorzugsweise in dem zweiten Lagersitz eingesetzt wird, ist vorzugsweise ein Wälzlager.

Gemäß einer weiteren bevorzugten Ausführungsform ist ein erstes Zahnrad an einem zweiten Rotorendabschnitt gelagert, wobei an der Nebenwelle ein zweites Zahnrad gelagert ist, das mit dem ersten Zahnrad in Eingriff steht.

Bei dieser Ausführungsform ist es möglich, die Nebenwelle mit dem zweiten Zahnrad an dem Maschinengehäuse vorzumontieren, derart, dass das zweite Zahnrad unmittelbar mit dem ersten Zahnrad in Eingriff steht.

Der zweite Rotorendabschnitt ist dabei vorzugsweise jener Abschnitt des Rotors, der sich aus dem Maschinengehäuse heraus erstreckt. Das zweite Zahnrad ist vorzugsweise ein Zwischenzahnrad der oben beschriebenen Art.

Ferner ist es insgesamt vorteilhaft, wenn der Stator ein Blechpaket aufweist, das in einen Zylinderabschnitt des Maschinengehäuses eingesetzt ist, wobei zwischen dem Blechpaket und dem Zylinderabschnitt wenigstens ein Kühlkanal ausgebildet ist.

Der Kühlkanal ist vorzugsweise direkt gebildet durch das Blechpaket und den Zylinderabschnitt, so dass eine direkte Kühlung des Stators realisierbar ist. Das Kühlfluid, das durch den Kühlkanal hindurchleitbar ist, ist vorzugsweise ein Fluid aus dem Antriebsstrang, vorzugsweise Getriebeöl. Bei einer Abdichtung des Kühlkanals könnte jedoch auch ein spezielles Kühlfluid wie Wasser verwendet werden.

Der Zylinderabschnitt des Maschinengehäuses kann, wie oben erwähnt, einstückig mit einem ersten Wandabschnitt ausgebildet sein.

Ferner ist es vorteilhaft, wenn zwischen dem Blechpaket und dem Zylinderabschnitt eine Mehrzahl von Kühlkanälen ausgebildet ist, die vorzugsweise über den Umfang verteilt sind, wobei eine Verteilereinrichtung zum Zuführen von Kühlfluid zu den Kühlkanälen im Bereich eines zweiten Wandabschnittes des Maschinengehäuses ausgebildet ist.

Die Verteilereinrichtung kann dabei von der Funktionsweise her ausgebildet sein, wie es in dem Dokument DE 10 2012 022 452 A1 beschrieben ist, zumindest was die Kühlung der elektrischen Maschinenanordnung angeht.

Das Maschinengehäuse kann gegenüber dem Innenraum des Antriebsstranggehäuses wie dem Kraftfahrzeuggetriebegehäuse offen sein, wobei beispielsweise für Lager zum Drehlagern des Rotors das Fluid aus dem Getriebegehäuse verwendbar ist (Getriebeöl wie beispielsweise ATF-Öl).

In weiteren Ausführungsformen ist es bevorzugt, wenn zumindest ein Teil des Maschinengehäuses gegenüber dem Innenraum des Antriebsstranggehäuses abgedichtet ist. Der abgedichtete Teil kann dabei beispielsweise ein Kühlbereich sein, mittels dessen die elektrische Maschine gekühlt wird, um auf diese Weise ein spezielles Kühlfluid verwenden zu können.

Bei dem - nicht zur Erfindung gehörenden - Verfahren ist es von besonderem Vorzug, wenn der andere Rotorendabschnitt über ein erstes Drehlager wie ein Wälzlager drehbar in Bezug auf das Maschinengehäuse gelagert wird und/oder der eine Rotorendabschnitt so in den Gehäuselagerabschnitt eingeführt wird, dass er sich teilweise aus dem Maschinengehäuse heraus erstreckt.

Insgesamt kann die Rotorwelle für ihren Betrieb mittels zwei Wälzlagern, insbesondere Kugellagern gelagert sein. Eines der Lager ist dabei vorzugsweise Teil der elektrischen Maschinenanordnung, das andere Lager ist vorzugsweise nicht Teil der elektrischen Maschinenanordnung und wird erst beim Einbau in ein Getriebegehäuse montiert.

An dem Maschinengehäuse ist vorzugsweise eine axiale Übergabestelle zur Übergabe von Kühlfluid vorhanden, wobei die Übergabestelle vorzugsweise im Bereich des zweiten Wandabschnittes ausgebildet ist. Über die Übergabestelle kann Kühlfluid beispielsweise zu der Verteilereinrichtung zugeführt werden.

Bei einer klein ausgeführten elektrischen Maschine und bei geringen radialen Lagerkräften kann - nicht zur Erfindung gehörend - eine Lagerung des Rotors auch direkt über das Maschinengehäuse erfolgen, so dass Lagerkräfte in das Maschinengehäuse eingeleitet werden und keine radiale Abstützung des Maschinengehäuses im Antriebsstranggehäuse notwendig ist. Die Zentrierung des Rotorlagerabschnittes an dem Gehäuselagerabschnitt kann an einem Wellenabschnitt des Rotors, am Ritzel, an Rotorpaket der elektrischen Maschine oder an einem anderen Bauteil der Rotorwelle erfolgen. In manchen Fällen beinhaltet die elektrische Maschinenanordnung gar kein Betriebs-Wellenlager, insbesondere, wenn eine solche Zentrierung auf beiden axialen Enden vorgesehen ist.

Die elektrische Maschinenanordnung ist unmittelbar nach der Montage beim Hersteller prüfbar, wobei die elektrische Maschinenanordnung zu diesem Zweck vorzugsweise in einer Aufnahme montiert wird, die geometrisch dem Einbau im Getriebegehäuse entspricht. Nach der Prüfung kann die elektrische Maschinenanordnung transportiert werden, da durch die Zentriereinrichtung zwischen Rotorlagerabschnitt und Gehäuselagerabschnitt keine Gefahr besteht, dass der Rotor innen am Statorumfang anstößt. Zumindest der erste Wandabschnitt und der Zylinderabschnitt des Maschinengehäuses können aufgrund der Tatsache, dass nur geringe Lagerkräfte aufgenommen werden müssen, dünnwandig oder besonders leicht ausgeführt werden, und können gegebenenfalls auch mit großflächigen Ausnehmungen ausgebildet werden. Die Hauptfunktion insbesondere von dem Zylinderabschnitt und dem ersten Wandabschnitt ist dabei die Umhüllung des Statorpaketes der elektrischen Maschine einerseits und die Zentrierung der Welle darin, sowie der Abschluss von etwaigen Statorkühleinrichtungen, die vorzugsweise an der Außenseite des Stators ausgebildet sind.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeug-Antriebsstranges mit einem Kraftfahrzeuggetriebe und einer darin montierten elektrischen Maschinenanordnung;
- Fig. 2: eine schematische Darstellung eines Ausführungsbeispiels eines Antriebsstranges mit einer erfinderischen elektrischen Maschinenanordnung;
- Fig. 3: eine weitere Darstellung eines Antriebsstranges mit einer elektrischen Maschinenanordnung in einer Teil-Längsschnittdarstellung;
- Fig. 4: eine schematische perspektivische Außenansicht einer weiteren Ausführungsform einer elektrischen Maschinenanordnung;
- Fig. 5: eine weitere perspektivische Ansicht der elektrischen Maschinenanordnung der Fig. 4; und
- Fig. 6: eine schematische perspektivische, teilweise aufgebrochene Darstellung einer elektrischen Maschinenanordnung.

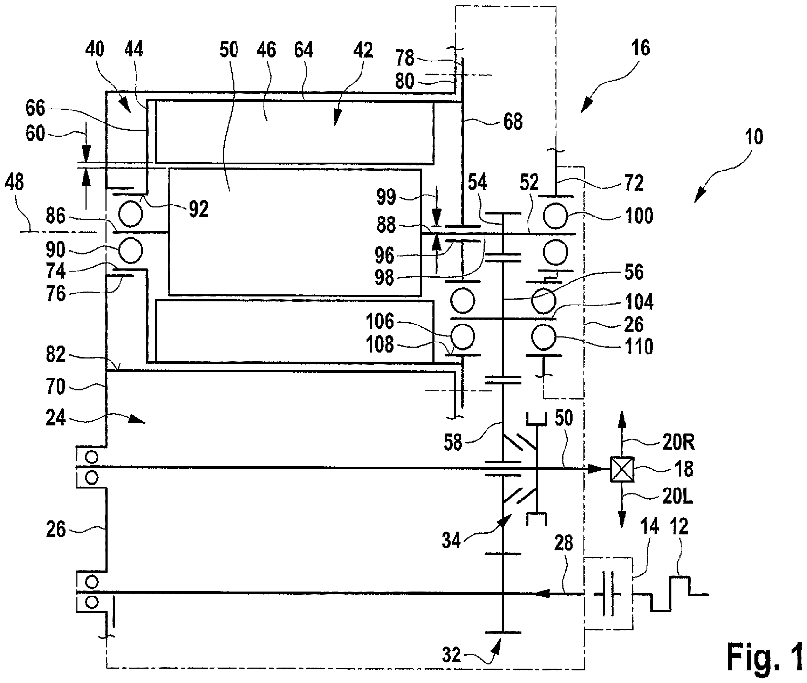

In Fig. 1 ist ein Antriebsstrang für ein Kraftfahrzeug schematisch dargestellt und generell mit 10 bezeichnet.

Der Antriebsstrang 10 weist einen primären Antriebsmotor 12 auf, beispielsweise in Form eines Verbrennungsmotors. Ferner beinhaltet der Antriebsstrang 10 eine Kupplungsanordnung 14, die eingangsseitig mit dem Antriebsmotor 12 verbunden ist, und ausgangsseitig mit einer Getriebeanordnung 16. Ein Ausgang der Getriebeanordnung 16 ist mit einem Differential 18 verbunden, mittels dessen Antriebsleistung auf angetriebene Räder 20L, 20R verteilbar ist.

Die Getriebeanordnung 16 beinhaltet ein Stufengetriebe 24, das vorliegend als Vorgelegegetriebe in Stirnradbauweise ausgeführt ist. Das Getriebe 24 weist ein Getriebegehäuse 26 auf, an dem eine Eingangswellenanordnung 28 gelagert ist. Die Eingangswellenanordnung 28 ist mit der Kupplungsanordnung 14 verbunden.

Ferner ist an dem Getriebegehäuse 26 eine Ausgangswellenanordnung 30 gelagert, die mit dem Differential 18 verbunden ist. Eine Mehrzahl von Gang-Radsätzen 32 (von denen in Fig. 1 aus Übersichtlichkeitsgründen nur einer dargestellt ist) verbinden die Eingangswellenanordnung 28 mit der Ausgangswellenanordnung 30. Die Gang-Radsätze 32 sind mittels jeweiliger Schaltkupplungen 34 schaltbar. Genauer gesagt beinhaltet jeder Gang-Radsatz ein Festrad und ein Losrad, die miteinander in Eingriff stehen. Das Losrad ist mittels einer zugeordneten Schaltkupplung 34 mit einer Welle drehfest verbindbar, an der das Losrad drehbar gelagert ist.

Das Getriebe 24 kann als manuelles Getriebe ausgebildet sein, kann jedoch auch ein automatisiertes Getriebe sein. Insbesondere kann das Getriebe 24 ein Doppelkupplungsgetriebe sein. In diesem Fall beinhaltet die Kupplungsanordnung 14 zwei Reibkupplungen, und die Eingangswellenanordnung 28 beinhaltet zwei Eingangswellen, wie es im Stand der Technik an sich bekannt ist. Bei Doppelkupplungsgetrieben erfolgen Gangwechsel durch Überschneiden der Betätigung der Kupplungen der Kupplungsanordnung 14, so dass Gangwechsel im Wesentlichen ohne Zugkrafteinbruch durchgeführt werden können.

Vorliegend beinhaltet der Antriebsstrang 10 eine elektrische Maschinenanordnung 40, wobei die elektrische Maschinenanordnung 40 als sekundärer Antriebsmotor betrieben werden kann, aber auch als Generator betrieben werden kann, um beispielsweise eine nicht näher dargestellte Batterie des Antriebsstranges 10 zu laden.

Die elektrische Maschinenanordnung 40 beinhaltet eine elektrische Maschine 42 und ein Maschinengehäuse 44. Die elektrische Maschine 42 weist einen Stator 46 auf, der in dem Maschinengehäuse 44 festgelegt ist. Die elektrische Maschine 42 und folglich deren Stator 46 sind koaxial zu einer Maschinen- oder Rotorachse 48 angeordnet. Die Maschinen- oder Rotorachse 48 ist parallel zu der Eingangswellenanordnung 28 und/oder der Ausgangswellenanordnung 30 ausgebildet.

Die elektrische Maschine 42 weist ferner einen Rotor 50 auf, der vorliegend koaxial innerhalb des Stators 46 angeordnet ist und eine Antriebswelle 52 aufweist, die koaxial zu der Rotorachse 48 ausgerichtet ist. An der Antriebswelle 52 ist ein Antriebsritzel 54 festgelegt. Das Antriebsritzel 54 steht in Eingriff mit einem Zwischenrad 56. Das Zwischenrad 56 wiederum steht ebenfalls in Eingriff mit einem Losrad 58 eines Gang-Radsatzes 32 des Getriebes 24. Sofern die zugeordnete Schaltkupplung 34 geschlossen ist, kann folglich Antriebsleistung von der elektrischen Maschine 42 über den Stirnradsatz aus Antriebsritzel 54, Zwischenrad 56 und Losrad 58 auf den Ausgang des Getriebes 24 geführt werden.

Die elektrische Maschine 42 kann dabei insbesondere mit einem von zwei Teilgetrieben des Getriebes 24 verbunden sein, wenn dieses als Doppelkupplungsgetriebe ausgebildet ist, insbesondere mit jenem Teilgetriebe, das den geraden Gangstufen und/oder einer Rückwärtsgangstufe zugeordnet ist.

Die elektrische Maschine 42 kann über eine feste Übersetzungsstufe einer Eingangswelle des Getriebes 24, insbesondere der Eingangswelle von einem der Teilgetriebe des Getriebes 24, zugeordnet sein. Die feste Übersetzungsstufe kann durch geeignete Zahnräder gebildet sein, auch Losräder einer Gangverzahnung sind hierbei möglich. Ein Radsatz 32, an den die elektrische Maschine 42 angebunden sein kann, kann beispielsweise einer mittleren Gangstufe zugeordnet sein, wie beispielsweise der Gangstufe 4. Alternativ kann das Losrad 58 auch der Gangstufe 2 zugeordnet sein, oder auch der Gangstufe 6, oder einer noch höheren Gangstufe.

Es ist jedoch auch denkbar, die elektrische Maschine 42 dem anderen Teilgetriebe zuzuordnen, in diesem Fall bevorzugt ebenfalls einer mittleren Gangstufe, beispielsweise der Gangstufe 3 oder der Gangstufe 5. Generell ist es auch denkbar, die elektrische Maschine 42 mit dem Ausgang des Getriebes 24 zu verbinden, die elektrische Maschine 42 folglich dem Abtrieb des Getriebes 24, d.h. drehzahlproportional zur Fahrgeschwindigkeit, zuzuordnen.

In Fig. 1 ist ferner schematisch dargestellt, dass zwischen dem Rotor 50 und dem Stator 46 ein Luftspalt 60 vorhanden ist. Der Rotor 50 kann an seinem Außenumfang eine Mehrzahl von Permanentmagneten beinhalten. Der Stator ist in an sich üblicher Weise mit elektrischen Wicklungsanschlüssen versehen, um elektrische Leistung der elektrischen Maschine 42 zuzuführen oder aus dieser zu entnehmen. Die elektrische Maschine 42 kann generell jede Art von elektrischer Maschine sein, beispielsweise eine Asynchronmaschine, eine permanent- oder fremderregte Synchronmaschine, eine Reluktanzmaschine, etc.

Das Maschinengehäuse 44 beinhaltet einen Zylinderabschnitt 64, der koaxial zu der elektrischen Maschine 42 angeordnet ist und beispielsweise außen um den Stator 46 herum festgelegt ist. Das Maschinengehäuse 44 weist ferner einen ersten Wandabschnitt 66 auf, der auf der der Antriebswelle 52 axial gegenüberliegenden Seite der elektrischen Maschine 42 angeordnet ist, sowie einen zweiten Wandabschnitt 68, der der Antriebswelle 52 zugewandt ist.

Der erste Wandabschnitt 66 und der Zylinderabschnitt 64 können einstückig miteinander ausgebildet sein, beispielsweise aus einem dünnen Material wie einem Blech. Der zweite Wandabschnitt 68 kann als Lagerplatte ausgebildet sein, die zur Aufnahme von Radialkräften und zur Übergabe solcher Radialkräfte an das Getriebegehäuse 26 ausgelegt ist. Der zweite Wandabschnitt 68 in Form einer solchen Lagerplatte kann zu diesem Zweck mit dem Getriebegehäuse 26 verbunden sein.

Das Getriebegehäuse 26 weist eine erste Gehäusewand 70 auf, die etwa parallel zu dem ersten Wandabschnitt 66 des Maschinengehäuses 44 und benachbart hierzu angeordnet ist. Ferner beinhaltet das Getriebegehäuse 26 eine zweite Gehäusewand 72, die benachbart ist zu dem zweiten Wandabschnitt 68 des Maschinengehäuses 44.

Der erste Wandabschnitt 66 des Maschinengehäuses 44 weist einen Ringsteg 74 auf, der koaxial zu der Rotorachse 48 ausgerichtet ist. Die erste Gehäusewand 70 weist eine Ringstegaufnahme 76 auf, in die der Ringsteg 74 axial eingeführt werden kann, derart, dass in den Ringsteg 74 eingeleitete radiale Kräfte auf das Getriebegehäuse 26 übertragen werden können.

Das Maschinengehäuse 44 weist ferner im Bereich des zweiten Wandabschnittes 68 einen Maschinengehäuseflansch 78 auf, der über schematisch angedeutete Verbindungsmittel mit einem Getriebegehäuseflansch 80 des Getriebegehäuses 26 verbunden ist.

Mit anderen Worten kann die elektrische Maschinenanordnung 40 in axialer Richtung in das Getriebegehäuse 26 eingeführt werden, bis der Ringsteg 74 in der Ringstegaufnahme 76 aufgenommen ist und der Maschinengehäuseflansch 78 an den Getriebegehäuseflansch 80 geschraubt oder sonst wie befestigt werden kann.

Das Getriebegehäuse 26 kann ferner ergänzend eine Maschinengehäuseaufnahme 82 aufweisen, wie sie in Fig. 1 schematisch angedeutet ist. Das Getriebegehäuse 26 muss jedoch das Maschinengehäuse 44 nicht vollumfänglich umgeben.

Der Rotor 50 weist einen ersten axialen Rotorendabschnitt 86 sowie einen gegenüberliegenden zweiten axialen Rotorendabschnitt 88 auf.

Der erste axiale Rotorendabschnitt 86 ist über ein erstes Drehlager 90, das in einen ersten Lagersitz 92 des ersten Wandabschnittes 66 des Maschinengehäuses 44 eingesetzt ist, drehbar in Bezug auf das Maschinengehäuse 44 gelagert.

Der Lagersitz 92 ist vorzugsweise in axialer Überlappung mit dem Ringsteg 74 vorgesehen, um in das erste Drehlager 90 eingeleitete radiale Kräfte in das Getriebegehäuse einleiten zu können. Der Ringsteg 74 und der erste Lagersitz 92 können jedoch in axialer Richtung auch benachbart zueinander sein, so dass in das Maschinengehäuse 44 radial eingeleitete Kräfte zunächst axial übertragen werden, um dann über den Ringsteg 74 in das Getriebegehäuse 26 geleitet zu werden.

Der zweite axiale Rotorendabschnitt 88 weist einen Rotorlagerabschnitt 98 auf, der mit einem radialen Spiel 99 drehbar in Bezug auf einen Gehäuselagerabschnitt 96 drehbar in Bezug auf das Maschinengehäuse 44 gelagert ist. Das Zusammenwirken zwischen Rotorlagerabschnitt 98 und Gehäuselagerabschnitt 96 dient der Zentrierung des Rotors 50 in diesem Bereich, also im Bereich des zweiten axialen Rotorendabschnittes 88. Das radiale Spiel 99 ist dabei deutlich kleiner als der radiale Luftspalt 60 zwischen Rotor 50 und Stator 46.

Hierdurch kann verhindert werden, dass in einem Transportzustand, wenn die Maschinenanordnung 40 noch nicht in das Getriebegehäuse 26 eingebaut ist, der Rotor 50 den Stator 46 kontaktiert, beispielsweise aufgrund der Tatsache, dass der Rotor 50 starke Permanentmagnete an seinem Außenumfang enthält.

Der zweite axiale Rotorendabschnitt 88 ist ferner über ein zweites Drehlager 100 drehbar in Bezug auf die zweite Gehäusewand 72 des Getriebegehäuses 26 gelagert. Die Montage der zweiten Gehäusewand 72 und des Lagers 100 in Bezug auf den zweiten axialen Rotorendabschnitt 88 erfolgt vorzugsweise erst nachdem die elektrische Maschinenanordnung 40 in dem Getriebegehäuse 26 montiert worden ist.

Das Antriebsritzel 54 ist in axialer Richtung zwischen dem Rotorlagerabschnitt 98 und dem zweiten Drehlager 100 angeordnet. Das erste Drehlager 90 und das zweite Drehlager 100 können jeweils als Wälzlager, insbesondere als Kugellager ausgebildet sein.

Sofern das Antriebsritzel 54 schrägverzahnt ist, dient das zweite Drehlager 100 vorzugsweise auch dazu, Axialkräfte aufzunehmen, die durch den Zahneingriff entstehen.

Das Zwischenrad 56 ist an einer Nebenwelle 104 festgelegt. Die Nebenwelle 104 ist über ein erstes Nebenwellenlager 106 drehbar in Bezug auf den zweiten Wandabschnitt 68 des Maschinengehäuses 44 gelagert. Zu diesem Zweck weist der zweite Wandabschnitt 68 einen zweiten Lagersitz 108 auf, der exzentrisch versetzt in Bezug auf die Rotorachse 48 an dem zweiten Wandabschnitt 68 ausgebildet ist.

Die Nebenwelle 104 wird auf der axial gegenüberliegenden Seite des Zwischenrades 56 mittels eines zweiten Nebenwellenlagers 110 drehbar in Bezug auf das Getriebegehäuse 26 gelagert, insbesondere in Bezug auf die zweite Gehäusewand 72. Zu diesem Zweck ist an der zweiten Gehäusewand 72 vorzugsweise ein geeigneter Lagersitz vorgesehen. Das erste Nebenwellenlager 106 und das zweite Nebenwellenlager 110 können jeweils als Wälzlager ausgebildet sein, insbesondere als Kugellager, können jedoch auch als Gleitlager ausgebildet sein.

Die Nebenwelle 104 mit dem daran festgelegten Zwischenrad 56 kann mit der vormontierten elektrischen Maschinenanordnung 40 bereitgestellt werden, derart, dass in den zweiten Wandabschnitt 68 bereits das erste Nebenwellenlager 106 eingesetzt ist und die Nebenwelle 104 darin eingesetzt wird, derart, dass das Zwischenrad 56 mit dem Antriebsritzel 54 in Eingriff steht. Vorzugsweise erfolgt die Montage der Nebenwelle 104 mit ihren Lagern 106, 110 jedoch erst nachdem die elektrische Maschinenanordnung 40 an dem Getriebegehäuse 26 montiert worden ist.

In den nachfolgenden Figuren sind weitere Ausführungsformen von Antriebssträngen und elektrischen Maschinenanordnungen dargestellt, die hinsichtlich Aufbau und Funktionsweise generell dem Antriebsstrang der Fig. 1 bzw. der elektrischen Maschinenanordnung der Fig. 1 entsprechen. Gleiche Elemente sind daher durch gleiche Bezugszeichen gekennzeichnet. Im Folgenden werden im Wesentlichen die Unterschiede erläutert.

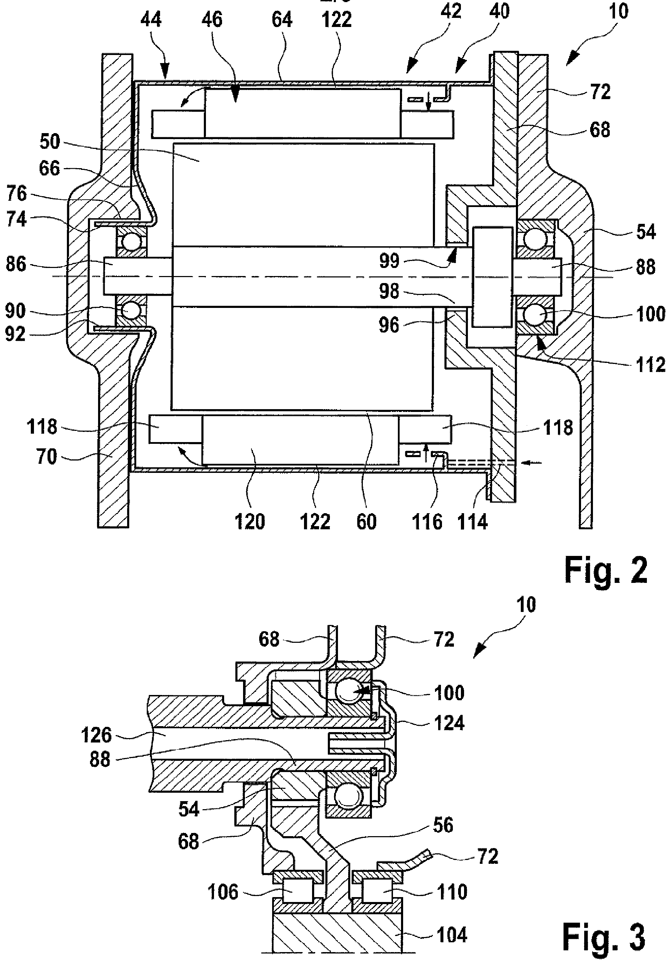

Fig. 2 zeigt einen Teil eines Antriebsstranges 10 mit einer elektrischen Maschinenanordnung 14, wobei das Maschinengehäuse 44 durch einen massiven zweiten Wandabschnitt 68 in Form einer Lagerplatte gebildet ist, die so dimensioniert ist, dass darin beispielsweise auch ein nicht abgestützter Lagersitz für die Nebenwelle 104 ausgebildet sein kann, obgleich dies in Fig. 2 nicht dargestellt ist. Der Zylinderabschnitt 64 und der erste Wandabschnitt 66 sind hingegen als dünne Abschnitte ausgebildet und können einstückig miteinander ausgebildet sein. Beispielsweise kann das Gehäuseteil, das den Zylinderabschnitt 64 und den ersten Wandabschnitt 66 bildet, aus einem Blechtopf gebildet sein.

Es ist zu erkennen, dass das erste Drehlager 90 sich in axialer Richtung mit der Ringstegaufnahme 76 überlappt, um Radialkräfte über den Ringsteg 74 möglichst direkt in die erste Gehäusewand 70 des Getriebegehäuses 26 einleiten zu können.

In Fig. 2 ist ferner gezeigt, dass für das zweite Drehlager 100 ein Lagersitz 112 in der zweiten Gehäusewand 72 ausgebildet ist. Ferner ist in Fig. 2 zu erkennen, dass in dem zweiten Wandabschnitt 68 des Maschinengehäuses 44 ein Fluidanschluss 114 ausgebildet sein kann, über den Kühlfluid zugeführt werden kann. Der Fluidanschluss 114 kann im Inneren des Maschinengehäuses 44 mit einer Verteilereinrichtung 116 verbunden sein, die beispielsweise nach der Art eines Ringkanals ausgebildet ist. Eingeleitetes Fluid kann über Öffnungen in dem Ringkanal 116 auf die benachbarten Wickelköpfe 118 von Wicklungen des Stators 46 geführt werden, um diese zu kühlen, denn die Wickelköpfe 118 sind im Betrieb der elektrischen Maschine 42 am stärksten thermisch belastet.

Der Stator 46 weist ferner ein Blechpaket 120 auf, das unmittelbar am Innenumfang des Zylinderabschnittes 64 anliegt. Dabei sind, über den Umfang verteilt, an dem Blechpaket 120 eine Mehrzahl von Kühlkanälen 122 ausgebildet, die sich in axialer Richtung erstrecken, derart, dass über den Fluidanschluss 114 eingeleitetes Fluid durch die Kühlkanäle 122 strömen kann, um den Stator 46 zu kühlen. Am axialen Ende, das dem ersten Wandabschnitt 66 benachbart ist, kann das Fluid aus den Kühlkanälen austreten und auf die dort vorgesehenen Wickelköpfe 118 geführt werden, um auch diese zu kühlen.

Das Kühlkonzept kann dem Kühlkonzept entsprechen, das in den Dokumenten DE 10 2012 022 452 A1 und 10 2012 022 453 A1 offenbart ist.

Fig. 3 zeigt eine weitere Ausführungsform eines Antriebsstranges 10 mit einer Detailansicht einer zweiten Gehäusewand 72 und eines zweiten Wandabschnittes 68.

Es ist zu erkennen, dass der zweite axiale Rotorendabschnitt 88, der sich aus dem zweiten Wandabschnitt 68 in axialer Richtung heraus erstreckt, als Hohlwelle ausgebildet ist und an seinem axialen Ende mit einer Abdeckkappe 124 verbunden ist, über die Kühlfluid, das über einen Axialkanal 126 in dem Rotorendabschnitt 66 zugeführt wird, hin zu dem zweiten Drehlager 100 führen zu können. Die Abdeckkappe 124 kann auch geschlossen sein, obgleich dies in Fig. 3 nicht dargestellt ist.

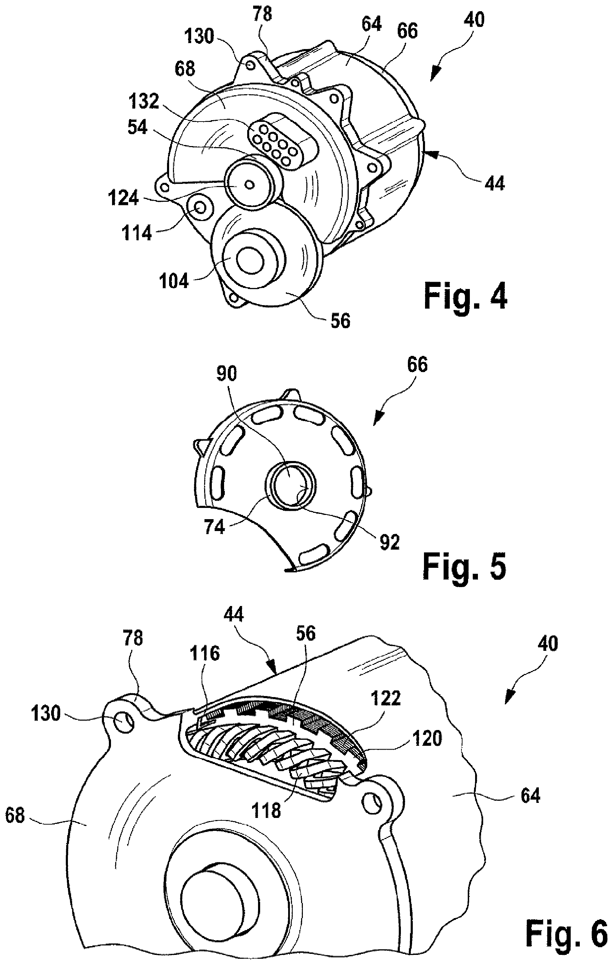

In den Fig. 4 bis 6 ist eine weitere Ausführungsform einer elektrischen Maschinenanordnung gezeigt. Zum einen ist in Fig. 4 gezeigt, dass der Maschinengehäuseflansch 78 eine Mehrzahl von radial vorstehenden Augen aufweisen kann, an denen jeweilige Bohrungen 130 zum Durchstecken von Schrauben oder dergleichen ausgebildet sind.

Ferner ist zu erkennen, dass an dem zweiten Wandabschnitt 68 ein elektrischer Steckverbinder ausgebildet ist, über den die Statorwicklungen elektrisch kontaktiert werden können.

Ferner ist in Fig. 4 der Eingriff zwischen dem Antriebsritzel 54 und dem Zwischenrad 56 erkennbar, das mittels der Nebenwelle 104 und dem nicht gezeigten ersten Nebenwellenlager 106 in Bezug auf den zweiten Wandabschnitt 68 drehgelagert ist.

Fig. 5 zeigt die elektrische Maschinenanordnung 40 der Fig. 4 von der Rückseite, wobei zu erkennen ist, dass der hier gezeigte erste Wandabschnitt 66 zwar einen Ringsteg 74 aufweist, jedoch ansonsten mit Durchbrechungen und Ausnehmungen versehen sein kann, um Gewicht zu sparen.

Fig. 6 zeigt eine ähnliche Ansicht wie Fig. 4, zeigt jedoch einen Ausschnitt, bei dem das Maschinengehäuse 44 weggebrochen ist. Man erkennt hier, dass der Stator 56 ein Blechpaket 120 mit einer Mehrzahl von axialen Kühlkanälen 122 aufweist, die zwischen dem Zylinderabschnitt 64 und dem Blechpaket 120 gebildet sind. Ferner ist zu erkennen, dass die Verteilereinrichtung 116 als Ringkanal ausgebildet sein kann, der mit dem zweiten Wandabschnitt 68 verbunden ist, und über den Fluid hin zu dem benachbarten Wickelkopf 118 geführt werden kann.

## Patentansprüche

1. Elektrische Maschinenanordnung (40) für einen Kraftfahrzeugantriebsstrang (10), mit
- einem Maschinengehäuse (44), das an einem Antriebsstranggehäuse (26) festlegbar ist,
- einem Stator (46), der in Bezug auf das Maschinengehäuse (44) festgelegt ist,
- einem Rotor (50), der konzentrisch zu dem Stator (46) innerhalb des Maschinengehäuses (44) gelagert ist und eine Rotorachse (48) aufweist,
- wobei zwischen dem Stator (46) und dem Rotor (50) ein Luftspalt (60) definiert ist,
wobei der Rotor (50) einen ersten axialen Rotorendabschnitt (86) aufweist, der über ein erstes Drehlager (90) drehbar in Bezug auf das Maschinengehäuse (44) gelagert ist, wobei das erste Drehlager (90) an einem ersten Lagersitz (92) eines ersten Wandabschnittes (66) des Maschinengehäuses (44) festgelegt ist und wobei der erste Wandabschnitt (66) des Maschinengehäuses (44) ferner so ausgebildet ist, dass von dem Rotor (50) über das erste Drehlager (90) in den ersten Wandabschnitt (66) eingeleitete Radialkräfte in das Antriebsstranggehäuse (26) übertragen werden können, wenn das Maschinengehäuse (44) an dem Antriebsstranggehäuse (26) festgelegt ist und wobei der erste Wandabschnitt (66) einen Ringsteg (74) aufweist, der in eine Ringstegaufnahme (76) des Antriebsstranggehäuses einsetzbar ist, **dadurch gekennzeichnet, dass**
der Ringsteg (74) in axialer Richtung überlappend zu dem ersten Lagersitz (92) des ersten Wandabschnittes (66) des Maschinengehäuses (44) angeordnet ist.

2. Elektrische Maschinenanordnung nach Anspruch 1, **dadurch gekennzeichnet, dass** das Maschinengehäuse (44) einen zweiten Lagersitz (108) für eine Nebenwelle (104) aufweist, die parallel versetzt zu einer Längsachse (48) des Rotors (50) ist.

3. Elektrische Maschinenanordnung nach Anspruch 2, "**dadurch gekennzeichnet, dass** der zweite Lagersitz (108) an einem zweiten Wandabschnitt (68) des Maschinengehäuses (44) ausgebildet ist, wobei der Gehäuselagerabschnitt (96) in dem zweiten Wandabschnitt (68) ausgebildet ist.

4. Elektrische Maschinenanordnung nach Anspruch 2 oder 3, **dadurch gekennzeichnet, dass** ein erstes Zahnrad (54) an einem zweiten Rotorendabschnitt (88) gelagert ist, wobei an der Nebenwelle (104) ein zweites Zahnrad (56) gelagert ist, das mit einem ersten Zahnrad (54) in Eingriff steht.

5. Elektrische Maschinenanordnung nach einem der Ansprüche 1 - 4, **dadurch gekennzeichnet, dass** der Stator (46) ein Blechpaket (120) aufweist, das in einen Zylinderabschnitt (64) des Maschinengehäuses (44) eingesetzt ist, wobei zwischen dem Blechpaket (120) und dem Zylinderabschnitt (64) wenigstens ein Kühlkanal (122) ausgebildet ist.

6. Elektrische Maschinenanordnung nach Anspruch 3, **dadurch gekennzeichnet, dass** zwischen dem Blechpaket (120) und dem Zylinderabschnitt (64) eine Mehrzahl von Kühlkanälen (122) ausgebildet ist, wobei eine Verteilereinrichtung (116) zum Zuführen von Kühlfluid zu den Kühlkanälen (122) im Bereich eines zweiten Wandabschnitt (68) des Maschinengehäuses (44) ausgebildet ist

7. Elektrische Maschinenanordnung nach einem der Ansprüche 1 - 6, **dadurch gekennzeichnet, dass** zumindest ein Teil des Maschinengehäuses (44) gegenüber dem Innenraum des Antriebsgehäuses (26) abgedichtet ist.

8. Kraftfahrzeuggetriebe (24) mit einem Getriebegehäuse (26), innerhalb dessen eine elektrische Maschinenanordnung (40) nach einem der Ansprüche 1 - 7 festgelegt ist.

## Claims

1. Electrical machine assembly (40) for a motor vehicle drive train (10), with
- a machine housing (44) which can be fixed on a drive train housing (26),
- a stator (46) which is fixed in relation to the machine housing (44),
- a rotor (50) which is mounted within the machine housing (44) concentrically with respect to the stator (46) and has a rotor axis (48),
- an air gap (60) being defined between the stator (46) and the rotor (50),
the rotor (50) having a first axial rotor end section (86) which is mounted rotatably in relation to the machine housing (44) via a first pivot bearing (90), the first pivot bearing (90) being fixed on a first bearing seat (92) of a first wall section (66) of the machine housing (44), and the first wall section (66) of the machine housing (44) being configured, furthermore, in such a way that radial forces which are introduced into the first wall section (66) by the rotor (50) via the first pivot bearing (90) can be transmitted into the drive train housing (26) if the machine housing (44) is fixed on the drive train housing (26), and the first wall section (66) having an annular web (74) which can be inserted into an annular web receptacle (76) of the drive train housing,
**characterized in that**
the annular web (74) is arranged so as to overlap the first bearing seat (92) of the first wall section (66) of the machine housing (44) in the axial direction.

2. Electrical machine assembly according to Claim 1, **characterized in that** the machine housing (44) has a second bearing seat (108) for an auxiliary shaft (104) which is offset in parallel with respect to a longitudinal axis (48) of the rotor (50).

3. Electrical machine assembly according to Claim 2, **characterized in that** the second bearing seat (108) is configured on a second wall section (68) of the machine housing (44), the housing bearing section (96) being configured in the second wall section (68).

4. Electrical machine assembly according to Claim 2 or 3, **characterized in that** a first gearwheel (54) is mounted on a second rotor end section (88), a second gearwheel (56) which is in engagement with a first gearwheel (54) being mounted on the auxiliary shaft (104).

5. Electrical machine assembly according to one of Claims 1 to 4, **characterized in that** the stator (46) has a laminated core (120) which is inserted into a cylinder section (64) of the machine housing (44), at least one cooling duct (122) being configured between the laminated core (120) and the cylinder section (64).

6. Electrical machine assembly according to Claim 3, **characterized in that** a plurality of cooling ducts (122) are configured between the laminated core (120) and the cylinder section (64), a distributor device (116) for feeding cooling fluid to the cooling ducts (122) being configured in the region of a second wall section (68) of the machine housing (44).

7. Electrical machine assembly according to one of Claims 1 to 6, **characterized in that** at least one part of the machine housing (44) is sealed with respect to the interior space of the drive housing (26).

8. Motor vehicle transmission gearbox (24) with a transmission gearbox housing (26), within which an electrical machine assembly (40) according to one of Claims 1 to 7 is fixed.

## Revendications

1. Système de machine électrique (40) pour une chaîne cinématique de véhicule automobile (10), comprenant
- un carter de machine (44) qui peut être fixé sur un carter de chaîne cinématique (26),
- un stator (46) qui peut être fixé par rapport au carter de machine (44),
- un rotor (50) qui est monté concentrique par rapport au stator (46) à l'intérieur du carter de machine (44) et présente un axe de rotor (48),
- un entrefer (60) étant défini entre le stator (46) et le rotor (50), le rotor (50) présentant une première partie d'extrémité de rotor axiale (86) qui est montée rotative par l'intermédiaire d'un premier palier rotatif (90) par rapport au carter de machine (44), le premier palier rotatif (90) étant fixé sur un premier siège de palier (92) d'une première partie de paroi (66) du carter de machine (44), et dans lequel la première partie de paroi (66) du carter de machine (44) est en outre réalisée de telle sorte que des forces radiales introduites du rotor (50) via le premier palier rotatif (90) dans la première partie de paroi (66) peuvent être transmises au carter de chaîne cinématique (26) lorsque le carter de machine (44) est fixé au carter de chaîne cinématique (26), et dans lequel la première partie de paroi (66) présente une nervure annulaire (74) qui peut être insérée dans un logement de nervure annulaire (76) du carter de chaîne cinématique, **caractérisé en ce que** la nervure annulaire (74) est disposée en chevauchement par rapport au premier siège de palier (92) de la première partie de paroi (66) du carter de machine (44).

2. Système de machine électrique selon la revendication 1, **caractérisé en ce que** le carter de machine (44) présente un deuxième siège de palier (108) pour un arbre secondaire (104) qui est décalé en parallèle par rapport à un axe longitudinal (48) du rotor (50).

3. Système de machine électrique selon la revendication 2, **caractérisé en ce que** le deuxième siège de palier (108) est réalisé sur une deuxième parie de paroi (68) du carter de machine (44), la partie de palier de carter (96) étant réalisée dans la deuxième partie de paroi (68).

4. Système de machine électrique selon la revendication 2 ou 3, **caractérisé en ce qu'**un premier pignon (54) est monté sur une deuxième partie d'extrémité de rotor (88), un deuxième pignon (56) étant monté sur l'arbre secondaire (104) et étant en prise avec un premier pignon (54).

5. Système de machine électrique selon l'une quelconque des revendications 1 à 4, **caractérisé en ce que** le stator (46) présente un empilage de tôles (120) qui est inséré dans une partie cylindrique (64) du carter de machine (44), au moins un canal de refroidissement (122) étant réalisé entre l'empilage de tôles (120) et la partie cylindrique (64).

6. Système de machine électrique selon la revendication 3, **caractérisé en ce qu'**une pluralité de canaux de refroidissement (122) est réalisée entre l'empilage de tôles (120) et la partie cylindrique (64), un dispositif de distribution (116) pour amener un fluide de refroidissement aux canaux de refroidissement (122) étant réalisé au niveau d'une deuxième partie de paroi (68) du carter de machine (44).

7. Système de machine électrique selon l'une quelconque des revendications 1 à 6, **caractérisé en ce qu'**au moins une partie du carter de machine (44) est rendue étanche par rapport à l'intérieur du carter d'entraînement (26).

8. Boîte de vitesses de véhicule automobile (24), comprenant un carter de boîte de vitesses (26) à l'intérieur duquel est fixé un système de machine électrique (40) selon l'une quelconque des revendications 1 à 7.
